# EUROPÄISCHE PATENTANMELDUNG

(11) **EP 3 273 200 A1**
(43) Veröffentlichungstag der Anmeldung: **24.01.2018**
(21) Anmeldenummer: 17180328.1
(22) Anmeldetag: 07.07.2017
(51) Int. Cl.: G01B 9/02, G01B 11/02, G01B 21/04

(54) **MESSSYSTEM ZUM MESSEN VON LÄNGEN UND/ODER LÄNGENÄNDERUNGEN**

(30) Priorität: 22.07.2016 DE 102016113531; 20.02.2017 DE 102017103455
(71) Anmelder: Etalon AG, 38114 Braunschweig (DE)
(72) Erfinder: SCHWENKE, Heinrich, 38100 Braunschweig (DE); WISSMANN, Mark, 38100 Braunschweig (DE); OEST, Andreas, 38100 Braunschweig (DE); BACH, Sissy Anna, 38126 Braunschweig (DE)
(74) Vertreter: Gramm, Lins & Partner Patent- und Rechtsanwälte PartGmbB

(57) **Zusammenfassung**

Die vorliegende Erfindung umfasst ein Messsystem zum Messen von Längen und/oder Längenänderungen von Messstrecken, wobei das Messsystem
• wenigstens ein Reflektorelement (24),
• mehrere Messanordnungen (18), die jeweils
i. eine Referenzfläche (20) aufweisen und
ii. eine Messstrecke (22) definieren, die sich von der Referenzfläche (20) zu dem Reflektorelement (24) erstreckt, und

• eine Strahlungsquelle (2) zum Aussenden elektromagnetischer Strahlung zu den Messanordnungen (28) aufweist,
wobei das Messsystem zudem
• einen Detektor (26) zum Detektieren elektromagnetischer Strahlung, die in einer Messanordnung (18) reflektiert wurde,
• eine Auswerteeinheit (30) und
• ein Verteilerelement (6) aufweist, das
o wenigstens einen Eingang (8) und mehrere Ausgänge (10) aufweist, um elektromagnetische Strahlung von der Strahlungsquelle (2) zu einer oder mehreren Messanordnungen (18) und von dort zu dem Detektor (26) zu leiten.

## Beschreibung

Die Erfindung betrifft ein Messsystem zum Messen von Längen und/oder Längenänderungen von Messstrecken, wobei das Messsystem wenigstens ein Reflektorelement, mehrere Messanordnungen, die jeweils eine Referenzfläche aufweisen und eine Messstrecke definieren, die sich von der jeweiligen Referenzfläche zu dem Reflektorelement erstreckt, und eine Strahlungsquelle zum Aussenden elektromagnetischer Strahlung zu der Messanordnung aufweist.

Derartige Messsysteme sind aus dem Stand der Technik seit langem bekannt. Es handelt sich um Interferometer, bei denen die elektromagnetische Strahlung, die von der Strahlungsquelle ausgesandt wird, auf zwei unterschiedlichen Wegen die Messanordnung durchläuft, wobei beide Strahlanteile anschließend zur Interferenz gebracht werden. Bei der Strahlungsquelle handelt es sich meist und bevorzugt um einen Laser, der bevorzugt monochromatisches Licht aussendet. In einer hier bevorzugten Ausgestaltung eines derartigen Interferometers ist die Referenzfläche der Messanordnung beispielsweise ein halbdurchlässiger Spiegel. Ein Teil der einfallenden elektromagnetischen Strahlung wird an dieser Referenzfläche reflektiert und bildet den ersten der beiden miteinander zur Interferenz zu bringenden Strahlungsanteile. Der zweite Anteil durchläuft die Referenzfläche ohne reflektiert zu werden und trifft auf das Reflektorelement. Von diesem wird es reflektiert und durchläuft die Messanordnung vorzugsweise auf dem gleichen Weg in umgekehrter Richtung, so dass dieser Anteil erneut durch die Referenzfläche tritt und aus der Messanordnung abgeführt wird. Dies wird beispielsweise in der EP 2045572 B1 beschrieben.

Diese beiden Strahlungsanteile werden zur Interferenz gebracht und auf einem Detektor detektiert. Das detektierte Signal kann von einer Auswerteeinheit ausgewertet werden, so dass insbesondere Informationen über die Längenänderung einer Messstrecke ermittelt werden können. Im beschriebenen Beispiel ist die Messstrecke das Doppelte der Strecke zwischen Referenzfläche und Reflektorelement.

Herkömmlicherweise sind Interferometer nur in der Lage, Längenänderungen der Messstrecke zu bestimmen, ohne jedoch die Möglichkeit zu haben, die absolute Länge der Messstrecke zu bestimmen. Zwischenzeitlich sind jedoch Interferometer bekannt, bei denen die Strahlungsquelle Licht unterschiedlicher Wellenlänge aussendet und diese Wellenlänge insbesondere bevorzugt kontinuierlich durchbestimmbar ist. Auf diese Weise lässt sich ein Messaufbau und ein Messverfahren realisieren, bei dem über ein derartiges Interferometer die absolute Länge der Messstrecke bestimmt werden kann. Ein derartiges Interferometer ist beispielsweise dem Artikel "Multi-channel absolute distance measurement system with sub ppm-accuracy and 20 m range using frequency scanning interferometry and gas absorption cell", Optics Express 22 (2014) 24869-24893 zu entnehmen.

Messsysteme mit mehreren derartigen Messanordnungen, mit denen folglich Längenänderungen mehrerer Messstrecken überwacht werden können, werden in einer Vielzahl unterschiedlicher Anwendungen benötigt. So werden beispielsweise Deformationsmessungen von großen Maschinen oder großen Vorrichtungen, beispielsweise Flugzeugteilen wie etwa Tragflächen, genauso über derartige Messsysteme vorgenommen, wie beispielsweise die Überwachung von Deformationen bei Großteleskopen oder hochpräzisen Messgeräten, wie beispielsweise Teilchendetektoren wie sie beispielsweise am CERN zur Anwendung kommen. Der große Vorteil besteht darin, dass derartige Messsysteme auch unter Vakuumbedingungen oder in extrem tiefen Temperaturbereichen, der sogenannten Cryotechnik, zur Anwendung kommen können. Selbstverständlich können auch Mess- und Werkzeugmaschinen überprüft, überwacht und kalibriert werden.

Nachteilig ist jedoch, dass beim Messsystemen mit mehreren Messanordnungen, die folglich zur Überwachung von Längenänderungen mehrerer Messstrecken verwendet werden, die jeweilige Messstrecke permanent überwacht werden muss, da lediglich Längenänderungen detektiert werden können. Sobald der Messstrahl für einen bestimmten Zeitraum unterbrochen wird, lässt sich ein innerhalb dieses Zeitraums vorgenommene Längenänderung der Messstrecke mit einem herkömmlichen Interferometer nicht mehr zurückverfolgen, so dass eine neue Kalibrierung und eine neue absolute Längenmessung notwendig wird. Daher werden bisher sämtliche Messstrecken permanent überwacht, so dass die elektromagnetische Strahlung, die von gegebenenfalls nur einer einzigen Strahlungsquelle ausgesandt wird, auf mehrere Messkanäle verteilt wird, die zu den verschiedenen Messanordnungen führen. Die in den Messanordnungen reflektierte elektromagnetische Strahlung muss jedoch für jeden Messkanal mittels eines separaten Detektors und dementsprechend einer daran gekoppelten Auswerteeinrichtung detektiert und ausgewertet werden. Da derartige Detektoren und die Auswerteelektronik kostenintensiv sind, ist dies ein deutlicher Nachteil.

Messsysteme der eingangs erwähnten Art können auch verwendet werden, um beispielsweise technische Mehrkörpersysteme, insbesondere Bearbeitungs- oder Werkzeugmaschinen, zu kalibrieren. Ein entsprechendes Verfahren ist beispielsweise aus der DE 10 2010 021 839 A1 bekannt. Ein Maschinenkopf, dessen Bewegung zu kalibrieren und zu überprüfen ist, wird mit einem Laserinterferometer bestückt, das einen Laserstrahl auf einen Reflektor aussendet. Dieser Reflektor ist fest mit der Maschine, beispielsweise dem Maschinenbett, verbunden. Der Maschinenkopf wird nun entlang des vom Laserinterferometers ausgesandten Laserstrahls auf den Reflektor zu oder von ihm weg bewegt. Nachteilig ist jedoch, dass ein relativ großes und schweres Laserinterferometer an dem Maschinenkopf angeordnet werden muss. Dies ist insbesondere bei kleinen Maschinen nicht problemlos möglich. Alternative Ausführungsformen sind aus der DE 103 39 194 A1 sowie der DE 199 47 374 A1 bekannt. In beiden Dokumenten, wie auch in der DE 10 2007 004 934 A1 wird ein beweglicher Laser verwendet, der als sogenannter "Lasertracker" ausgebildet ist. Der von ihm ausgesandte Laserstrahl wird auf einen Reflektor geleitet, der an dem Maschinenkopf der zu überwachenden oder zu kalibrierenden Maschine angeordnet ist. Nachteilig ist jedoch, dass der Laser der Bewegung des Maschinenkopfes nachgeführt werden muss, was eine aufwendige Steuerung und Regelung sowie eine große Anzahl von beweglichen Bauteilen zur Folge hat.

Der vorliegenden Erfindung liegt daher die Aufgabe zugrunde, ein Messsystem gemäß dem Oberbegriff des Anspruchs 1 so weiterzuentwickeln, dass es kostengünstig herstellbar ist und dennoch in zumindest nahezu allen genannten Anwendungen Verwendung finden kann.

Die Erfindung löst die gestellte Aufgabe durch ein Messsystem zum Messen von Längen und/oder Längenänderungen von Messstrecken gemäß dem Oberbegriff des Anspruchs 1, das sich dadurch auszeichnet, dass das Messsystem zudem einen Detektor zum Detektieren elektromagnetischer Strahlung, die in einer Messanordnung reflektiert wurde, eine Auswerteeinheit und ein Verteilerelement aufweist, das wenigstens einen Eingang und mehrere Ausgänge aufweist, um elektromagnetische Strahlung von der Strahlungsquelle zu einer oder mehreren Messanordnungen und von dort zu dem Detektor zu leiten.

Erfindungsgemäß sind folglich nur ein einziger Detektor und eine einzige Auswerteeinrichtung notwendig, um die verschiedenen Messkanäle, die den mehreren Messanordnungen und damit den mehreren Messstrecken entsprechen, auszuwerten. Dies geschieht naturgemäß nacheinander.

Die Referenzfläche zeichnet sich insbesondere dadurch aus, dass ein Teil der von der wenigstens einen Strahlungsquelle ausgesandten elektromagnetischen Strahlung an der Referenzfläche reflektiert wird, während ein anderer Teil die Referenzfläche durchtritt und auf das Reflektorelement geführt wird. Die Referenzfläche kann dabei folglich ein halbdurchlässiger Spiegel oder eine Grenzfläche zwischen zwei Medien mit unterschiedlicher optischer Dichte, beispielsweise eine Glas-Luft-Grenzfläche sein.

In einer Ausführungsform der Erfindung verfügt jede der Messanordnungen über ein separates Reflektorelement. Selbstverständlich können auch mehrere Messanordnungen, vorzugsweise alle Messanordnungen über ein gemeinsames Reflektorelement verfügen. Dadurch wird der apparative Aufwand reduziert und das Messsystem kostengünstiger. Dabei kann es sinnvoll und vorteilhaft sein, das jeweilige gemeinsame Reflektorelement bewegbar, beispielsweise drehbar anzuordnen. Das Reflektorelement wird dann vorzugsweise in die Lage und/oder Position gebracht, die die jeweils verwendete Messanordnung benötigt. Das Reflektorelement kann eine Mehrzahl von einzelnen Reflektorflächen aufweisen, beispielsweise jeweils in Form von Retroreflektoren oder Katzenaugen, die die Eigenschaft besitzen, Licht in die Richtung zu reflektieren, aus der es auf die jeweilige Reflektorfläche fällt.

In einer bevorzugten Ausgestaltung ist das Verteilerelement derart ausgebildet, dass die elektromagnetische Strahlung von der Strahlungsquelle das Verteilerelement nur durch einen wählbaren Ausgang verlässt. In einer besonders bevorzugten Ausgestaltung handelt es sich bei einem derartigen Verteilerelement um einen Faserschalter für Glasfasern. Ein solcher Schalter, der als Verteilerelement verwendet werden kann, muss besondere Anforderungen erfüllen. Insbesondere dürfen keine oder nur möglichst wenig Rückreflektionen am Verteilerelement geschehen. Es ist wichtig, dass die elektromagnetische Strahlung, die von der Strahlungsquelle dem Verteilerelement zugeführt wird, dieses Verteilerelement möglichst vollständig durchtritt, um zu der eigentlichen Messanordnung zu gelangen. Reflektionen, die innerhalb des Verteilerelementes auftauchen, können das Messergebnis stören und somit verschlechtern. Daher hat es sich als vorteilhaft herausgestellt, wenn Grenzflächen, durch die die elektromagnetische Strahlung hindurchtreten muss, beispielsweise eine entspiegelnde Beschichtung aufweisen oder die Materialien beispielsweise innerhalb des Verteilerelementes mit ihrem optischen Brechungsindex so aufeinander angepasst sind, dass eine möglichst kleine, bevorzugt jedoch überhaupt keine Brechungsindexdifferenz vorliegt. Alternativ oder zusätzlich dazu können die Grenzflächen, durch die die elektromagnetische Strahlung hindurchtritt, angeschrägt sein, um einen reflektierten Anteil der elektromagnetischen Strahlung daran zu hindern, auf den Detektor zurückgeworfen zu werden.

Die von der Strahlungsquelle ausgesandte elektromagnetische Strahlung wird vorteilhafterweise in eine Glasfaser eingekoppelt und in dieser zu dem Verteilerelement geleitet. Die Strahlung tritt durch den wenigstens einen Eingang in das Verteilerelement ein und wird darin auf den jeweils einen gewählten Ausgang geleitet. Dieser ist frei einstellbar, um die Messanordnung, deren Messstrecke gemessen werden soll, auswählen zu können.

Vorzugsweise handelt es sich dabei um eine mechanische Einstellung, die dafür sorgt, dass eine optische Verbindung zwischen dem wenigstens einen Eingang und dem jeweiligen gewählten Ausgang vorliegt. Wird reflektierte elektromagnetische Strahlung aus der Messanordnung zurückgeleitet, tritt sie durch den jeweiligen Ausgang in das Verteilerelement ein und wird über die gleiche Verbindung auf den wenigstens einen Eingang geleitet. Von dort wird sie zu dem Detektor geleitet, wo sie detektiert wird.

Auch der Transport der elektromagnetischen Strahlung vom Verteilerelement zu der jeweiligen Messanordnung erfolgt vorteilhafterweise über ein Glasfaserkabel. Auf diese Weise kann der räumliche Abstand zwischen den jeweiligen Messanordnungen untereinander und von der Messanordnung zu der Strahlungsquelle sehr groß, beispielsweise mehrere Kilometer, gewählt werden. Es lassen sich so beispielsweise ganze Gebäudekomplexe mit einem Glasfasernetz versehen, um in unterschiedlichsten Räumen, beispielsweise Werkshallen oder Produktionshallen unterschiedlichste Vorrichtungen, Werkzeugmaschinen oder Bauteilkomponenten überwachen zu können. Dabei ist besonders vorteilhafterweise nur eine einzige Strahlungsquelle, ein einziger Detektor und eine einzige Auswerteeinheit notwendig. Dadurch können die Kosten stark reduziert werden. Zudem können auch bestehende Objekte und Gebäudekomplexe nachgerüstet werden.

Alternativ oder zusätzlich dazu kann ein Verteilerelement auch derart ausgebildet sein, dass die elektromagnetische Strahlung von der wenigstens einen Strahlungsquelle das Verteilerelement durch mehrere, vorzugsweise wählbare, Ausgänge verlässt. So kann es sich bei dem Verteilerelement beispielsweise lediglich um ein Aufspaltelement handeln, das die eintretende elektromagnetische Strahlung, die von der Strahlungsquelle ausgesandt wurde, auf alle oder zumindest mehrere der vorhandenen Ausgänge verteilt. Für den Fall, dass die elektromagnetische Strahlung nicht auf alle Ausgänge verteilt werden soll, lässt sich vorteilhafterweise eine Auswahl der Ausgänge treffen, die mit elektromagnetischer Strahlung versehen werden sollen.

In dieser Ausgestaltung gilt es jedoch sicherzustellen, dass am Detektor nur elektromagnetische Strahlung ankommt, die in einer einzelnen Messanordnung reflektiert wurde. Elektromagnetische Strahlung einer einzelnen Strahlungsquelle, die von mehreren Messanordnungen reflektiert wurde und gleichzeitig am Detektor auftrifft, erschwert die Auswertung oder macht sie gar unmöglich.

Vorteilhafterweise ist jedoch zwischen den Ausgängen des Verteilerelementes und den Messanordnungen jeweils wenigstens ein Verdunkelungselement angeordnet, das in jeweils eine geöffnete Stellung und eine geschlossene Stellung bringbar ist. Mit diesen Verdunkelungselementen ist es möglich, die aus dem jeweiligen Ausgang austretende elektromagnetische Strahlung daran zu hindern, die Messanordnung zu erreichen. Es kann sich um Abschattungselemente oder Blenden oder sonstige Verdunkelungselemente handeln. Vorteilhafterweise befindet sich jeweils maximal eines der Verdunkelungselemente in der geöffneten Stellung. Auf diese Weise wird besonders einfach sichergestellt, dass nur elektromagnetische Strahlung zum Detektor gelangt, die in einer einzelnen Messanordnung reflektiert wurde.

Alternativ zu derartigen Verdunkelungselementen ist es jedoch auch möglich, beispielsweise die einzelnen Reflektorelemente der jeweiligen Messanordnungen in eine reflektierende und eine nicht reflektierende Stellung bringbar auszugestalten. Soll die Messstrecke, die von einer Messanordnung definiert wird, vermessen werden, wird der jeweilige Reflektor in die reflektierende Stellung gebracht, so dass die elektromagnetische Strahlung, die durch die Referenzfläche hindurch tritt auf das Reflektorelement trifft und von dort in die gewünschte Richtung, bevorzugt um 180° gedreht, reflektiert wird. Soll jedoch die jeweilige Messstrecke der Messanordnung nicht vermessen werden, kann das Reflektorelement beispielsweise aus dem Strahlengang entfernt oder gedreht werden, so dass kein reflektiertes Licht auf den Detektor gelangen kann.

Um das Auswerteergebnis zu verbessern, kann gleichzeitig beispielsweise auch die Referenzfläche aus dem Strahlengang entfernt werden, so dass auch von dieser Referenzfläche kein reflektiertes Licht auf den Detektor fallen kann.

In einer bevorzugten Ausführungsform umfasst das Messsystem mehrere Strahlungsquellen und mehrere Auswerteeinheiten. Dabei sind jedoch jeder Strahlungsquelle und jeder Auswerteeinheit mehrere Messanordnungen zugeordnet, wobei zwischen der jeweiligen Strahlungsquelle und den ihr zugeordneten Messanordnungen ein Verteilerelement angeordnet ist. Diese Verteilerelemente können für die unterschiedlichen Strahlungsquellen identisch oder unterschiedlich ausgebildet sein. Zudem ist es möglich, beispielsweise zwei Strahlungsquellen und zwei Auswerteeinheiten vorzusehen, denen jeweils eine Mehrzahl von Messanordnungen zugeordnet ist. In einer besonders bevorzugten Ausgestaltung des Messsystems sind jedoch die beiden Strahlungsquellen und die beiden Auswerteeinheiten vorteilhafterweise den gleichen Messanordnungen zugeordnet, so dass über das Verteilerelement nicht nur entschieden werden kann, welche Messanordnung mit elektromagnetischer Strahlung bestrahlt werden soll, sondern auch, aus welcher der gegebenenfalls mehreren Strahlungsquellen diese elektromagnetische Strahlung stammt. Dazu hat es sich als vorteilhaft herausgestellt, wenn das Verteilerelement mehrere Eingänge aufweist und eingerichtet ist, elektromagnetische Strahlung einer der Strahlungsquellen zu einer oder mehreren Messanordnungen zu leiten, wobei die Strahlungsquelle vorteilhafterweise wählbar ist.

In einer bevorzugten Ausgestaltung des Messsystems ist die wenigstens eine Strahlungsquelle und wenigstens eine Auswerteeinheit eingerichtet, die absolute Länge einer Messstrecke zu messen. Ein derartiges Absolutlängeninterferometer ist aus dem Stand der Technik bekannt, so dass hier auf eine detaillierte Beschreibung verzichtet wird. Wichtig ist jedoch, dass die Wellenlänge der von der Strahlungsquelle ausgesandten elektromagnetischen Strahlung über einen Wellenlängenbereich hinweg stufenlos kontinuierlich einstellbar und durchstimmbar ist. Um die absolute Länge einer Messstrecke zu bestimmen, wird während der Interferenzmessung die Wellenlänge der ausgesandten elektromagnetischen Strahlung von einer Startwellenlänge bis zu einer Endwellenlänge verändert. Start- und Endwellenlänge können beispielsweise über eine ebenfalls integrierte Gaszelle genau und reproduzierbar eingestellt werden. Das in der Gaszelle enthaltene Gas weist sowohl bei der Startwellenlänge als auch bei der Endwellenlänge eine Absorption auf, die lediglich von der verwendeten Gasart abhängt und somit sehr stabil einstellbar ist.

In einer bevorzugten Ausgestaltung ist wenigstens eine Strahlungsquelle und wenigstens eine Auswerteeinheit eingerichtet, eine Längenänderung der Messstrecke, vorzugsweise in Echtzeit, zu messen. Diese Art der Messung ist beispielsweise ausreichend, wenn beispielsweise ein Werkzeug einer Werkzeugmaschine oder ein zu bearbeitendes Bauteil um eine bestimmte Strecke bewegt werden soll. Dabei ist der die absolute Länge der zu messenden Messstrecke oftmals unerheblich und nur die Längenänderung relevant.

Vorzugsweise werden die Referenzflächen mehrere Messanordnungen in einem gemeinsamen Gehäuse angeordnet, das vorzugsweise modular aufgebaut ist. Derartige Gehäuse mit Referenzflächen können an bestimmten Punkten beispielsweise innerhalb einer Werkshalle angeordnet werden und dienen somit als Startpunkt für mehrere unterschiedliche Messstrecken unterschiedlicher Messanordnungen. Der modulare Aufbau ermöglicht es bei Bedarf die Gehäuse aufzustocken, um weitere Referenzflächen für weitere Messstrecken zu integrieren.

Bevorzugt wird vor dem Verteilerelement ein Faserverstärker angeordnet, um die Leistung der eingestrahlten elektromagnetischen Strahlung, also vorteilhafterweise des Laserlichtes des wenigstens einen Lasers, zu erhöhen. Dies ist insbesondere dann von Vorteil, wenn das Verteilerelement die eingestrahlte elektromagnetische Strahlung auf mehrere Ausgänge verteilt. Bei der Strahlungsquelle handelt es sich bevorzugt um einen Laser, der monochromatische elektromagnetische Strahlung vorteilhafterweise durchstimmbarer Wellenlänge, aussendet.

Die Erfindung löst die gestellte Aufgabe zudem durch ein Verfahren zum Überwachen wenigstens einer Maschine, vorzugsweise wenigstens einer Werkzeugmaschine, bei dem eine Länge und/oder eine Längenänderung einer Mehrzahl von Messstrecken, die den Abständen eines Bauteiles der wenigstens einen Maschine von jeweils einem Referenzpunkt entsprechen, mehrfach nacheinander gemessen und mit Referenzwerten verglichen wird, wobei zum Messen ein Messsystem der hier beschriebenen Art verwendet wird. Vorteilhafterweise handelt es sich um mehrere Maschinen, die insbesondere in unterschiedlichen Räumen, oder gar in unterschiedlichen Gebäuden vorhanden sind. Dabei ist es durchaus von Vorteil, wenn mehrere der Messstrecken einer einzelnen Maschine zugeordnet sind. Selbstverständlich ist erfindungsgemäß auch ein Verfahren, bei dem sämtliche Messstrecken an einer einzigen Maschine, beispielsweise einer Werkzeugmaschine, angeordnet sind. Die Messstrecke entspricht dabei dem Abstand eines Bauteils der Maschine von einem Referenzpunkt, der vorliegend durch die Referenzfläche bestimmt wird. Dabei ist es nicht notwendig, dass die elektromagnetische Strahlung direkt an dem Bauteil der zu überwachenden Maschine reflektiert wird. Es ist durchaus von Vorteil, nicht das jeweilige Bauteil der Maschine als Reflektorelement auszugestalten, sondern ein separates Reflektorelement zu verwenden, das an dem jeweiligen Bauteil angeordnet wird. Ist der Abstand, in dem das Reflektorelement zu dem Bauteil der Maschine angeordnet ist, bekannt, lässt sich auch der Abstand des Referenzpunktes zu dem jeweiligen Bauteil bestimmen.

Vorteilhafterweise spannen die Messstrecken der Messanordnungen einen Messraum auf und sind relativ zueinander unbeweglich. Dies ist insbesondere dann von Vorteil, wenn beispielsweise die Bewegungen von technischen Mehrkörpersystemen überprüft und/oder kalibriert werden sollen. Durch die einzelnen Messstrecken wird dann ein Messraum aufgespannt, der vorzugsweise so ausgebildet ist, dass er den Bewegungsraum, in dem ein Endeffektor eines technischen Mehrkörpersystems bewegbar ist, umfasst.

In einer bevorzugten Ausgestaltung erstrecken sich dabei wenigstens eine Messstrecke entlang wenigstens einer Kante und wenigstens eine andere Messstrecke entlang wenigstens einer Flächendiagonale des Messraumes. Welche Kante und/oder Flächendiagonale gewählt wird, und ob gegebenenfalls weitere Messstrecken sich entlang anderer Kanten oder anderer Flächendiagonalen des Messraumes erstrecken, hängt von der Art des zu überwachenden oder zu kalibrierenden technischen Mehrkörpersystems und der Anzahl der Freiheitsgrade beispielsweise eines Endeffektors ab, die für die Bewegung zuständig sind. Bei einer Dreiachsmaschine, deren Endeffektor in drei lineare Richtungen und um drei Rotationsachsen bewegbar ist, wobei die Bewegungsrichtungen und die Rotationsachsen vorzugsweise senkrecht aufeinander stehen, können 21 unterschiedliche Fehler, Ungenauigkeiten oder sonstige Fehlausrichtungen auftreten. Sollen alle diese Fehler erkannt und gegebenenfalls korrigiert werden, müssen eine ausreichende Anzahl von Messstrecken und eine bestimmte Anordnung der Messstrecken relativ zueinander gewählt werden.

Vorteilhafterweise erstreckt sich wenigstens eine der Messstrecken entlang einer Richtung, die den Messraum in einer ersten Richtung vollständig und in einer zweiten Richtung anteilig, bevorzugt zur Hälfte durchquert. Es handelt sich vorteilhafterweise um eine Halbdiagonale. Dabei ist jedoch auch jeder andere Anteil der zweiten Richtung denkbar. Während die Diagonale beispielsweise eine Flächendiagonale, die jeweilige Fläche des Messraums in der ersten Richtung und in der zweiten Richtung vollständig durchquert, ist dies bei der hier beschriebenen Messstrecke nur in einer Richtung der Fall. Dadurch wird es möglich, alle 21 unterschiedlichen möglichen Fehler zu bestimmen.

Vorzugsweise weist das wenigstens eine Reflektorelement wenigstens zwei, bevorzugt wenigstens drei Einzelreflektoren auf, die parallel zueinander voneinander beabstandet angeordnet sind. Damit lassen sich auch rotatorische Fehler, beispielsweise ein Rollen einer Achse detektieren, wenn eine entsprechende Messstrecke mehrfach vermessen wird, wobei verschiedene der Einzelreflektoren verwendet werden. Parallel bedeutet in diesem Fall vorzugsweise, dass die Einzelreflektoren den gleichen Winkelbereich aufweisen, aus dem ankommende Strahlung an dem Einzelreflektor reflektiert werden kann. Eine mathematische Parallelität ist zwar von Vorteil, jedoch nicht notwendig.

Die Erfindung löst die gestellte Aufgabe zudem durch ein technisches Mehrkörpersystem, insbesondere eine Bearbeitungs- oder Werkzeugmaschine, das wenigstens einen Endeffektor, der innerhalb eines Bewegungsraumes bewegbar ist, und ein Messsystem nach einem der hier beschriebenen Ausführungsformen aufweist, wobei die Messanordnungen des Messsystems derart angeordnet sind, dass die Messstrecken einen Messraum aufspannen, der den Bewegungsraum umfasst.

Vorteilhafterweise sind dabei die Referenzflächen außerhalb des Bewegungsraumes angeordnet.

Durch das erfindungsgemäße technische Mehrkörpersystem lassen sich eine Vielzahl, vorteilhafterweise sogar alle, der auftretenden oder möglichen Fehler bei einem bewegbaren Mehrkörpersystem detektieren und voneinander trennen. Dabei müssen am eigentlichen technischen Mehrkörpersystem, also der Bearbeitungs- oder Werkzeugmaschine, oder in deren unmittelbarer Nähe lediglich die verschiedenen Messanordnungen angeordnet werden. Dabei wird das Reflektorelement oder wenigstens ein Kollimator an dem Endeffektor befestigt. Wird wenigstens ein Kollimator an dem Endeffektor befestigt, wird die elektromagnetische Strahlung der Strahlungsquelle beispielsweise durch optische Leiter, beispielsweise Glasfasern zu dem Endeffektor geführt und durch den jeweiligen Kollimator geleitet. Der wenigstens eine Reflektor ist in diesem Fall an einer anderen Position angeordnet.

Die einzelnen Messstrecken der unterschiedlichen Messanordnungen werden durch die Richtung definiert, in der die elektromagnetische Strahlung von der Strahlungsquelle innerhalb der Messanordnung durch die Referenzfläche hindurch abgestrahlt wird. Diese Richtungen, entlang derer sich auch die Messstrecken erstrecken, sind dabei vorzugsweise so gewählt, dass der gesamte Bewegungsraum, in dem der Endeffektor bewegbar ist, abgedeckt wird. Vorteilhafterweise wird zumindest in jeder möglichen Bewegungsrichtung des Endeffektors die volle Beweglichkeit durch wenigstens eine Messstrecke abgedeckt. Dies bedeutet, dass beispielsweise eine Länge und/oder eine Längenänderung einer jeweiligen Messstrecke über den gesamten Arbeitsbereich des technischen Mehrkörpersystems bestimmt werden kann. Die eigentliche Auswerteeinheit mit dem Detektor und der Strahlungsquelle, die vorzugsweise ein Laser ist, kann an einem anderen Ort positioniert und aufgebaut werden, so dass es nicht mehr notwendig ist, sperrige oder umfangreiche Bauteile in oder an der Maschine, die es zu kalibrieren gilt, anzuordnen oder eine Vielzahl beweglicher Teile vorzusehen.

Ein erfindungsgemäßes Verfahren zum Ermitteln kinematischer Parameter eines technischen Mehrkörpersystems, insbesondere einer Bearbeitungs- oder Werkzeugmaschine, verfügt über die folgenden Schritte:
- Bereitstellen wenigstens eines Reflektorelementes an dem Mehrkörpersystem,
- Bereitstellen mehrerer Messanordnungen, so dass mehrere Messstrecken definiert sind, wobei wenigstens ein Reflektorelement relativ zu den Messanordnungen bewegbar ist,
- sequentielles Messen von Längen und/oder Längenänderungen der Messstrecken, wobei das Reflektorelement entlang der Messstrecke bewegt wird,
- Auswerten der gemessenen Längen und/oder Längenänderungen und
- Ermitteln der kinematischen Parameter.

Kinematische Parameter können dabei beispielsweise Fehlausrichtungen, Positionsabweichungen, Geradheitsabweichungen, Nicken, Gieren oder Rollen oder sonstige Abweichungen von Parametern des technischen Mehrkörpersystems von Sollwerten sein.

Vorzugsweise ist das wenigstens eine Reflektorelement oder wenigstens ein Element der Messanordnungen, insbesondere ein Kollimator, an einem Endeffektor des Mehrkörpersystems angeordnet.

Das am Endeffektor zu bewegende Element ist anders als im Stand der Technik lediglich der Reflektor, der klein und beispielsweise als Katzenauge ausgebildet sein kann oder ein Kollimator oder ein anderes Element der Messanordnungen. Da die Messanordnungen so ausgebildet sind, dass eine interferonmetrische Längenmessung stattfindet, können die einzelnen Interferonmeter faserbasiert sein, so dass die von der Strahlungsquelle ausgesandte elektromagnetische Strahlung beispielsweise über Glasfasern zu den einzelnen Messanordnungen geleitet werden kann. Da die einzelnen Messstrecken sequentiell, also nacheinander gemessen werden, ist es möglich, den Reflektor mit dem Endeffektor des technischen Mehrkörpersystems entlang einer Messstrecke zu verfahren bis die gewünschten Längen und/oder Längenänderungen gemessen sind. Anschließend wird der Endeffektor des technischen Mehrkörpersystems so bewegt, dass der Reflektor mit einer anderen Messanordnung eine neue Messstrecke bildet, die anschließend abgefahren und ausgemessen wird.

Vorzugsweise werden dabei einzelne Messstrecken mehrfach, insbesondere mit Reflektorelementen mit einem Versatz, einem sogenannten Offset, abgefahren und vermessen. Eine Messtrecke wird dabei beispielsweise ein erstes Mal abgefahren und das Reflektorelement befindet sich dabei direkt auf einer Achse des technischen Mehrkörpersystems. Mit einer solchen Messung ist ein rotatorischer Fehler der Bewegung des technischen Mehrkörpersystems und dessen Endeffektors nicht nachweisbar. Dazu wird die Messstrecke erneut vermessen, wobei nun der Reflektor einen Versatz relativ zu der Achse des Mehrkörpersystems aufweist. So kann eine Rotation erkannt werden. Dies kann mehrfach mit verschiedenem Versatz geschehen.

Sollten für bestimmte Messungen beengte Platzverhältnisse die Anbringung eines Kollimators nicht erlauben, kann ersatzweise ein Umlenkspiegel zum Einsatz kommen.

Je nach benötigter Messgenauigkeit und Messverfahren und in Abhängigkeit vom technischen Mehrkörpersystem können die eigentlichen Längen- und/oder Längenänderungsmessungen im Stillstand des Mehrkörpersystems oder während der Bewegung des Mehrkörpersystems durchgeführt werden. Insbesondere bei Mehrkörpersystemen, beispielsweise bei Bearbeitungs- oder Werkzeugmaschinen, die in Schwingungen geraten können, ist es von Vorteil, die einzelnen Messungen bei einer gleichförmigen Bewegung der Maschine, also möglichst ohne wirkende Beschleunigungen, durchzuführen oder nachdem eventuelle Schwingungen und Restbewegungen abgeklungen sind.

Ein derartiges Verfahren zum Ermitteln der kinematischen Parameter kann zur Kalibrierung oder zur Bestimmung von Abweichungen von Ist-Parametern von Sollwerten verwendet werden. Es ist vollautomatisierbar, und kommt von vollständig ohne bewegliche Teile oder nachzuführende Laser oder Reflektoren aus. Es ist beispielsweise möglich, am Endeffektor ein Reflektorelement, das über eine Vielzahl einzelner Reflektoren verfügt, die jeweils als Reflektorelement für eine der Messstrecken dienen können, oder einen Kollimator der Messanordnung anzuordnen. Eine Bewegung des jeweiligen Elementes, das am Maschinenkopf des Mehrkörpersystems angeordnet ist, ist in dieser Form nicht notwendig.

Mit Hilfe der beiliegenden Zeichnung wird nachfolgend ein Ausführungsbeispiel der vorliegenden Erfindung näher erläutert. Es zeigt:
- Figur 1: - die schematische Darstellung eines Messsystems gemäß einem ersten Ausführungsbeispiel der vorliegenden Erfindung,
- Figur 2: - die Darstellung eines Messsystems gemäß einem weiteren Ausführungsbeispiel der vorliegenden Erfindung,
- Figur 3: - eine beispielhafte Darstellung einer Messanordnung,
- Figur 4: - die schematische Darstellung eines Messsystems in einem technischen Mehrkörpersystem,
- Figuren 5 und 6: - verschiedene Reflektoranordnungen und
- Figuren 7 und 8: - verschiedene Kollimatoranordnungen zum Anordnen an einem Endeffektor eines technischen Mehrkörpersystems.

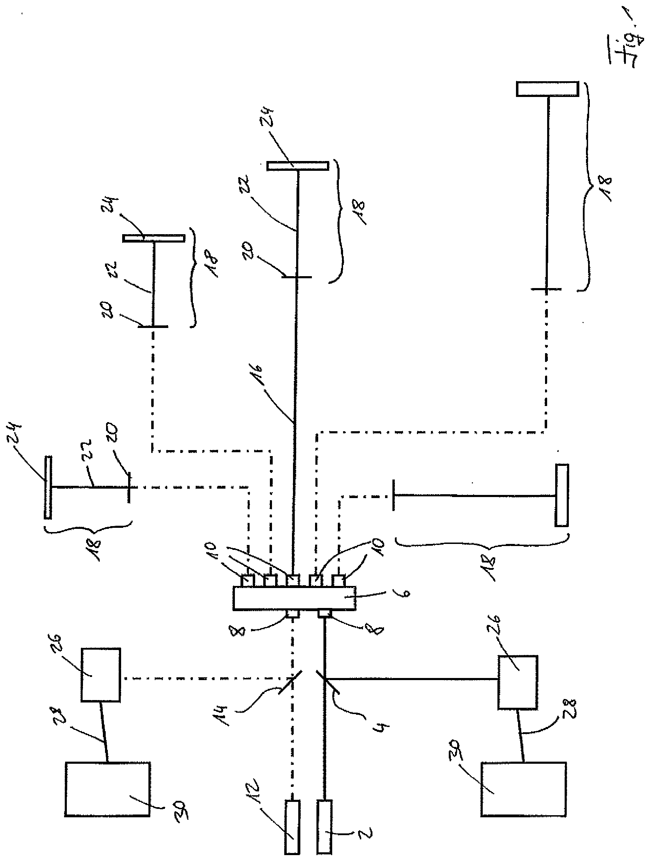

Figur 1 zeigt ein Messsystem gemäß einem ersten Ausführungsbeispiel der vorliegenden Erfindung. Die Vorrichtung verfügt über eine erste Strahlungsquelle 2, die beispielsweise ein Laser ist und elektromagnetische Strahlung aussendet, die zunächst auf einen halbdurchlässigen Spiegel 4 geleitet wird. Statt eines derartigen Spiegels kann auch ein Faser-Splitter mit zwei Eingängen und zwei Ausgängen verwendet werden. Die von der ersten Strahlungsquelle 2 ausgesandte elektromagnetische Strahlung durchtritt den halbdurchlässigen Spiegel und wird einem Verteilerelement 6 zugeleitet. Dieses verfügt über zwei Eingänge 8 und fünf Ausgänge 10. Eine zweite Strahlungsquelle 12 ist ebenfalls vorhanden, um elektromagnetische Strahlung durch einen zweiten halbdurchlässigen Spiegel 14 auf den zweiten Eingang 8 des Verteilerelementes 6 zu leiten. Der gestrichelte Verlauf des Weges der ausgesandten elektromagnetischen Strahlung deutet an, dass die zweite Strahlungsquelle 2 nicht aktiv ist.

Die elektromagnetische Strahlung von der ersten Strahlungsquelle 2 gelangt folglich durch den Eingang 8 in das Verteilerelement 6 und wird hier auf den dritten Ausgang 10 geleitet. Von diesem wird sie durch einen Lichtleiter 16, der beispielsweise ein Glasfaserkabel sein kann, zu einer Messanordnung 18 geleitet. Diese weist eine Referenzfläche 20 auf, die als Beginn einer Messstrecke 22 fungiert. Die Referenzfläche 20 ist als halbdurchlässiger Spiegel ausgebildet, so dass ein Teil der durch den Lichtleiter 16 vom Ausgang 10 des Verteilerelementes 6 ankommenden elektromagnetischen Strahlung an der Referenzfläche 20 reflektiert wird und durch den Lichtleiter 16 zurück zum Verteilerelement 6 geleitet wird. Der übrige Teil der elektromagnetischen Strahlung tritt durch die Referenzfläche 20 hindurch und erreicht nach dem Passieren der Messstrecke 22 ein Reflektorelement 24, das im gezeigten Ausführungsbeispiel als einfacher Spiegel ausgebildet ist, jedoch beispielsweise auch ein Katzenaugen-Element sein kann, durch das sichergestellt wird, dass die reflektierte Strahlung parallel zu der einfallenden Strahlung ist. Hier wird der Rest der elektromagnetischen Strahlung reflektiert und durch den Lichtleiter 16 zum Verteilerelement 6 geleitet.

Innerhalb des Verteilerelementes 6 wird das durch den Ausgang 10 einfallende Licht zu dem Eingang 8 geleitet, durch den die elektromagnetische Strahlung von der ersten Strahlungsquelle 2 das Verteilerelement erreicht hat. Hier tritt es aus dem Eingang 8 aus. Ein Teil wird vom halbdurchlässigen Spiegel 4 reflektiert, so dass die beiden Anteile der elektromagnetischen Strahlung zur Überlagerung gebracht werden und auf einen Detektor 26 treffen. Dieser ist über eine Datenverbindung 28 mit einer Auswerteeinheit 30 verbunden, die beispielsweise ein Computer sein kann.

In Figur 1 sind insgesamt fünf Messanordnungen 18 dargestellt, die jeweils eine Referenzfläche 20, eine Messstrecke 22 und ein Reflektorelement 24 aufweisen. Durch die unterschiedlichen Längen der Messstrecken 22 und die unterschiedlichen Orientierungen der Messanordnungen 18 wird dargestellt, dass die einzelnen Messanordnungen völlig unabhängig voneinander angeordnet und beispielsweise auch in unterschiedlichen Räumen oder Gebäuden angeordnet sein können. Die elektromagnetische Strahlung, die von der ersten Strahlungsquelle 2 oder der zweiten Strahlungsquelle 12 ausgesandt wird, wird bevorzugt über Glasfaserkabel oder andere Lichtleiter zum Verteilerelement 6 und/oder zu den Messanordnungen 18 geleitet.

In Figur 1 ist die zweite Strahlquelle dargestellt, die in der gezeigten Situation jedoch nicht aktiv ist, weswegen der Übertragungsweg der durch die zweite Strahlungsquelle 12 ausgesandten elektromagnetischen Strahlung gestrichelt dargestellt ist. Wird elektromagnetische Strahlung der zweiten Strahlungsquelle 12 verwendet, um die Länge oder eine Längenänderung einer Messstrecke 22 zu bestimmen, verlässt die reflektierte elektromagnetische Strahlung das Verteilerelement 6 auf dem Rückweg von der Messanordnung 18 durch den Eingang 8, durch den sie auch von der zweiten Strahlungsquelle 12 kommend das Verteilerelement 6 erreicht hat. Die Strahlung wird am zweiten halbdurchlässigen Spiegel 14 reflektiert und auf einen Detektor 26 geleitet, der ebenfalls über eine Datenverbindung 28 mit einer Auswerteeinheit 30 verbunden ist. Die beiden Auswerteeinheiten 30 können dabei durchaus Teil eines Computers oder einer Recheneinheit sein.

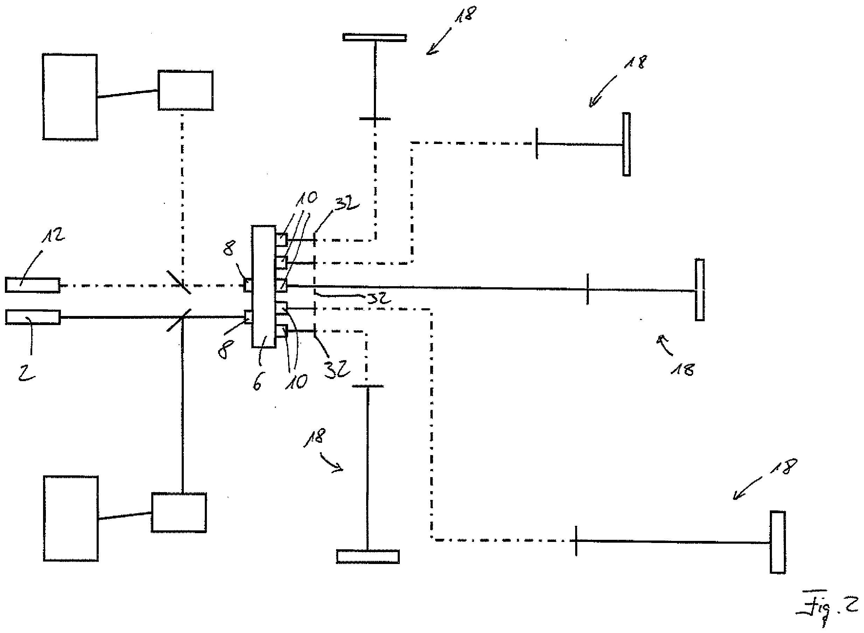

Figur 2 zeigt die Darstellung aus Figur 1, die sich lediglich durch ein anderes Verteilerelement 6 auszeichnet. Auch dieses verfügt über zwei Eingänge 8 und fünf Ausgänge 10, durch die die elektromagnetische Strahlung der beiden Strahlungsquellen 2, 12 zu den unterschiedlichen Messanordnungen 18 geleitet werden. Anders als bei der in Figur 1 gezeigten Ausführungsform verteilt jedoch das Verteilerelement 6 die elektromagnetische Strahlung gleichzeitig auf alle fünf Ausgänge 10 des Verteilerelementes. In jedem dieser Strahlengänge befindet sich ein Verdunkelungselement 32, das im gezeigten Ausführungsbeispiel als "Shutter" oder Blende ausgebildet ist. Man erkennt, dass die oberen beiden Verdunkelungselemente 32 und die unteren beiden Verdunkelungselemente 32 sich im geschlossenen Zustand befinden und somit die Ausbreitung der elektromagnetischen Strahlung in Richtung auf die jeweilige Messanordnung unterbinden. Lediglich das mittlere Verdunkelungselement befindet sich im geöffneten Zustand, so dass die elektromagnetische Strahlung das Verdunkelungselement passieren und zur Messanordnung 18 gelangen kann.

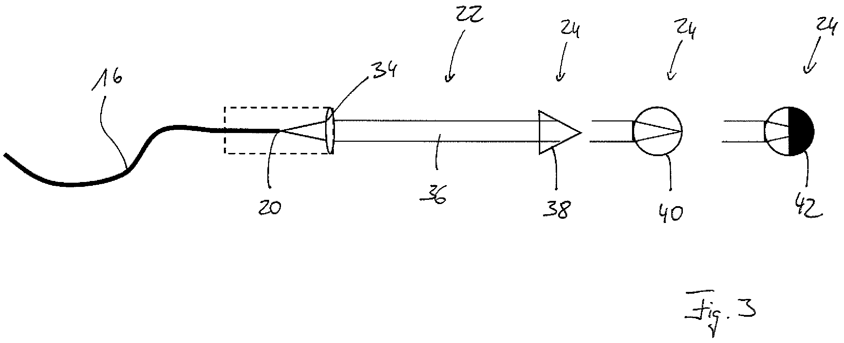

Figur 3 zeigt eine bevorzugte Ausführungsform einer Messanordnung für ein Messsystem gemäß einem Ausführungsbeispiel der vorliegenden Erfindung. Der Lichtleiter 16 transportiert elektromagnetische Strahlung einer nicht gezeigten Strahlungsquelle und verfügt an seinem Ende über die Referenzfläche 20, die halbdurchlässig ausgebildet ist. Ein Teil der elektromagnetischen Strahlung wird an der Referenzfläche 20 wieder in den Lichtleiter 16 zurückgespiegelt. Der verbleibende Teil der elektromagnetischen Strahlung trifft auf einen Kollimator 34 und wird durch diesen zu einem kollimierten Messstrahl 36. Am Ende der Messstrecke 22 trifft der kollimierte Messstrahl 36 auf das Reflektorelement 24, das in Figur 3 in drei unterschiedlichen Ausführungsformen dargestellt ist. Es kann beispielsweise als Triple-Reflektor 38, als unverspiegelte Glaskugel 40 oder als teilverspiegelte Glaskugel 42 ausgebildet sein. Die Glaskugeln haben vorteilhafterweise einen Brechungsindex nahe 2.

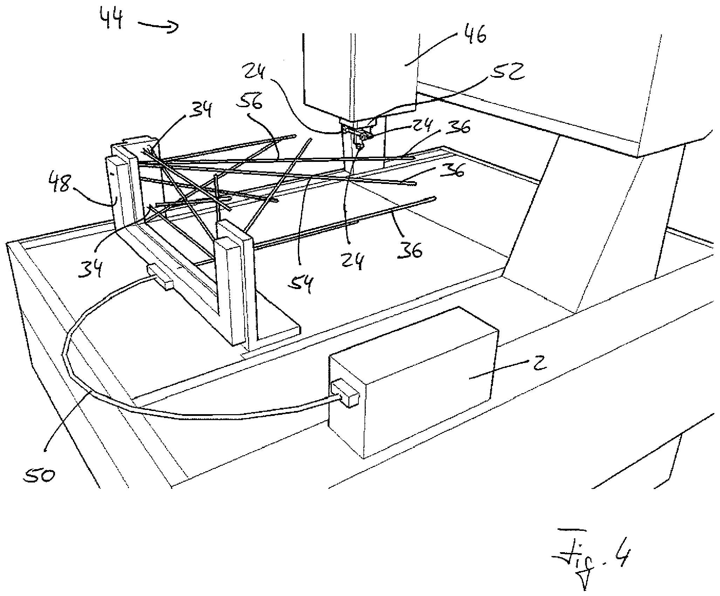

Figur 4 zeigt einen Teil eines technischen Mehrkörpersystems 44 mit einem Endeffektor 46, der in einem Messraum bewegbar ist. An diesem ist ein Messsystem gemäß einem Ausführungsbeispiel der vorliegenden Erfindung angeordnet. Man erkennt eine erste Strahlungsquelle 2, die als Laser ausgebildet ist und elektromagnetische Strahlung aussendet. An einer Halterung 48 sind verschiedene Kollimatoren 34 angeordnet, aus denen kollimierte Messstrahlen 36 ausgesandt werden können. Das von der ersten Strahlungsquelle 2 ausgesandte Laserlicht wird über Lichtleiter, die in einer Verbindungsleitung 50 angeordnet sind, zur Halterung 48 und den Kollimatoren 34 geleitet. Auch wenn in Figur 4 mehrere kollimierte Messstrahlen 36 dargestellt sind, werden die einzelnen Kollimatoren 34 vorteilhafterweise nacheinander angesteuert, so dass immer nur ein kollimierter Messstrahl 36 gleichzeitig erzeugt ist.

Am Endeffektor 46 befindet sich ein Anbauelement 52, das im vorliegenden Ausführungsbeispiel über drei Reflektorelemente 24 verfügt. Man erkennt, dass diese mit einem Versatz relativ zueinander angeordnet sind, so dass die gleiche Messstrecke mehrfach vermessen werden kann, um auf diese Weise auch rotatorische Abweichungen bestimmen zu können. In Figur 4 sind verschiedenste kollimierte Messstrahlen 36 dargestellt, die sich entlang verschiedener Richtungen erstrecken. Dabei ist ein Flächendiagonalstrahl 54 gezeigt, der sich entlang einer Flächendiagonale des Bewegungsraums oder Messraums erstreckt. Zudem ist auch ein Halbdiagonalstrahl 56 gezeigt, der so angeordnet ist, dass er den Messraum in einer ersten Richtung vollständig und in einer zweiten Richtung nur zur Hälfte durchquert. Dadurch lassen sich bei der mathematischen Lösung insbesondere die Anteile der Geradheitsabweichungen der beiden Achsen trennen, die diese Ebene aufspannen.

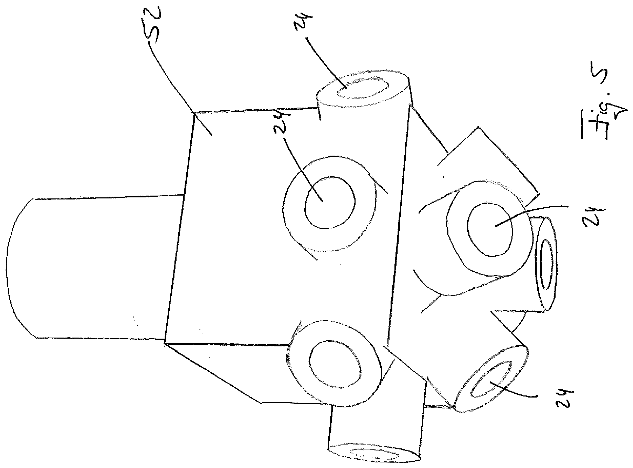

Figur 5 zeigt eine vergrößerte Darstellung des Anbauelementes 52, das über eine Vielzahl verschiedener Reflektorelemente 24 verfügt. Diese sind auf verschiedene Kollimatoren 34 ausrichtbar und verbleiben in dieser Ausrichtung, wenn der Endeffektor 46 entlang der entsprechenden Messstrecke bewegt wird.

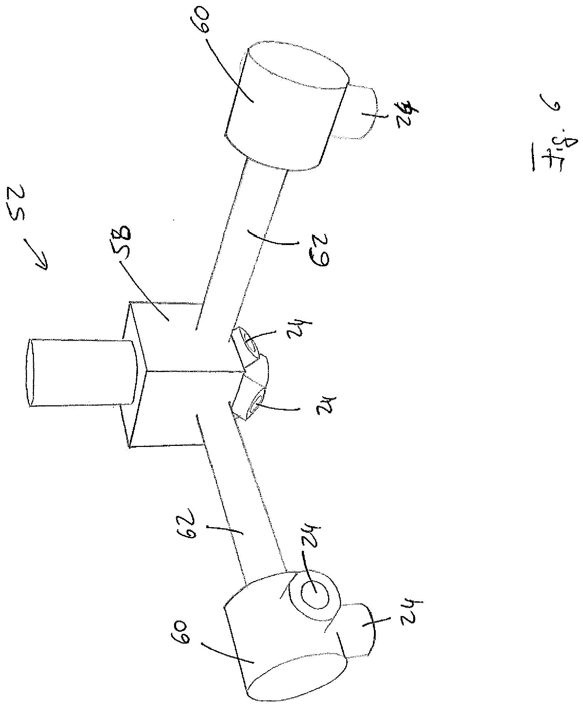

Figur 6 zeigt eine alternative Ausführungsform des Anbauelementes 52, das mit einem Mittelanteil 58 an dem Endeffektor 46 befestigbar ist. Am Mittelanteil 58 befinden sich Reflektorelemente 24. Zwei Außenanteile 60 sind über Streben 62 mit dem Mittelanteil 58 verbunden. Auch an diesem befinden sich Reflektorelemente 24, die relativ zu den Reflektorelementen 24 am Mittelanteil 58 mit einem Versatz ausgestattet sind.

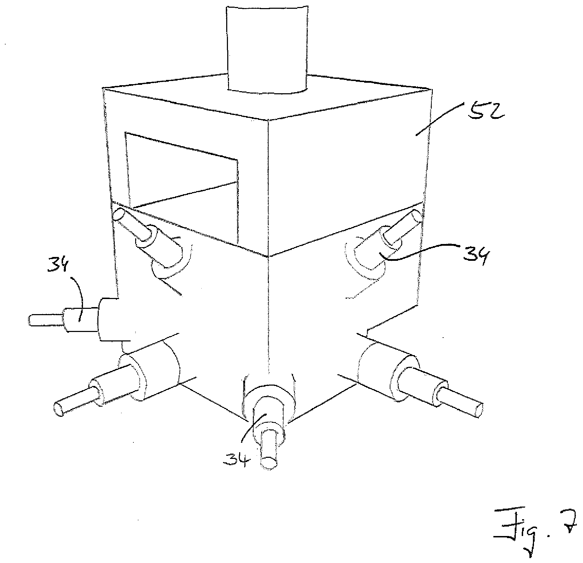

Figur 7 zeigt ein weiteres Anbauelement 52, an dem anders als in dem in Figur 5 gezeigten Anbauelement 52 keine Reflektorelemente, sondern Kollimatoren 34 angeordnet sind. Das von der Strahlungsquelle 2 ausgesandte Licht wird über einen nicht gezeigten Lichtleiter zu den Kollimatoren 34 geführt, die einzeln angesteuert werden können. Auf diese Weise kann das Licht in unterschiedliche Richtungen in den Messraum ausgesandt werden.

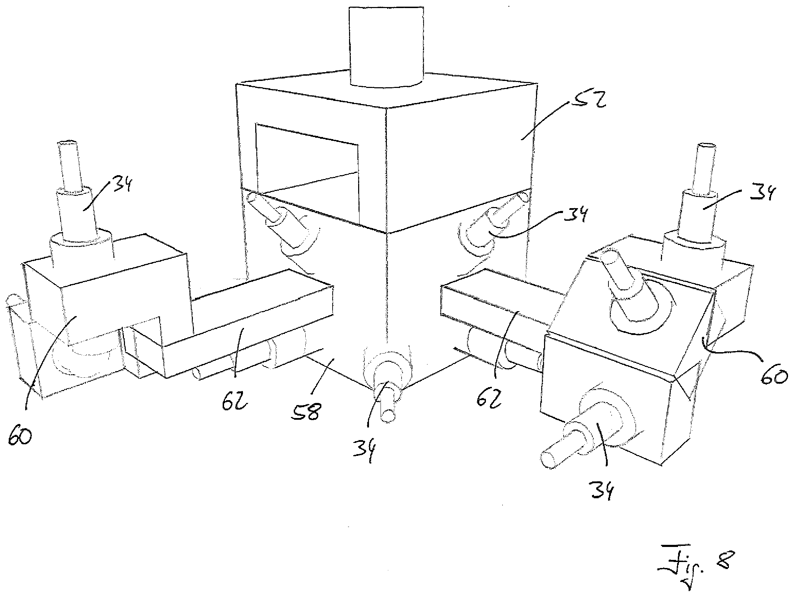

Figur 8 zeigt eine Anordnung eines Anbauelementes 52, das wie in Figur 7 über Kollimatoren 34 verfügt. Über den Mittelanteil 58, an dem sich bereits Kollimatoren 34 befinden, ist es am Endeffektor positionierbar. Über Streben 62 sind zwei Außenanteile 60 am Mittelanteil 58 angeordnet, die ebenfalls über Kollimatoren 34 verfügen. Auch auf diese Weise lassen sich Messstrecken mit Versatz mehrfach vermessen, um rotatorische Abweichungen feststellen zu können.

### Bezugszeichenliste

- 2: erste Strahlungsquelle
- 4: halbdurchlässiger Spiegel
- 6: Verteilerelement
- 8: Eingang
- 10: Ausgang
- 12: zweite Strahlungsquelle
- 14: zweiter halbdurchlässiger Spiegel
- 16: Lichtleiter
- 18: Messanordnung
- 20: Referenzfläche
- 22: Messstrecke
- 24: Reflektorelement
- 26: Detektor
- 28: Datenverbindung
- 30: Auswerteeinheit
- 32: Verdunkelungselement
- 34: Kollimator
- 36: kollimierter Messstrahl
- 38: Tripelreflektor
- 40: unverspiegelte Glaskugel
- 42: teilverspiegelte Glaskugel
- 44: technisches Mehrkörpersystem
- 46: Endeffektor
- 48: Halterung
- 50: Verbindungsleitung
- 52: Anbauelement
- 54: Flächendiagonalstrahl
- 56: Halbdiagonalstrahl
- 58: Mittelanteil
- 60: Außenanteil
- 62: Strebe

## Patentansprüche

1. Messsystem zum Messen von Längen und/oder Längenänderungen von Messstrecken, wobei das Messsystem
• wenigstens ein Reflektorelement (24),
• mehrere Messanordnungen (18), die jeweils
i. eine Referenzfläche (20) aufweisen und
ii. eine Messstrecke (22) definieren, die sich von der Referenzfläche (20) zu dem Reflektorelement (24) erstreckt, und
• eine Strahlungsquelle (2) zum Aussenden elektromagnetischer Strahlung zu den Messanordnungen (28) aufweist,
wobei das Messsystem zudem
• einen Detektor (26) zum Detektieren elektromagnetischer Strahlung, die in einer Messanordnung (18) reflektiert wurde,
• eine Auswerteeinheit (30) und
• ein Verteilerelement (6) aufweist, das
∘ wenigstens einen Eingang (8) und mehrere Ausgänge (10) aufweist, um elektromagnetische Strahlung von der Strahlungsquelle (2) zu einer oder mehreren Messanordnungen (18) und von dort zu dem Detektor (26) zu leiten.

2. Messsystem nach Anspruch 1, **dadurch gekennzeichnet, dass** jede Messanordnung (18) ein Reflektorelement (24) aufweist.

3. Messsystem nach Anspruch 1 oder 2, **dadurch gekennzeichnet, dass** die Messstrecken (22) der Messanordnungen (18) einen Messraum aufspannen und relativ zueinander unbeweglich sind.

4. Messsystem nach Anspruch 3, **dadurch gekennzeichnet, dass** sich wenigstens eine Messstrecke (22) entlang wenigstens einer Kante und wenigstens eine Messstrecke (22) entlang wenigstens einer Flächendiagonale des Messraums erstreckt.

5. Messsystem nach Anspruch 3 oder 4, **dadurch gekennzeichnet, dass** sich wenigstens eine Messstrecke (22) entlang einer Richtung erstreckt, die den Messraum in einer ersten Richtung vollständig und in einer zweiten Richtung anteilig, bevorzugt zur Hälfte, durchquert.

6. Messsystem nach einem der vorstehenden Ansprüche, **dadurch gekennzeichnet, dass** das wenigstens eine Reflektorelement (24) wenigstens zwei, bevorzugt wenigstens drei Einzelreflektoren aufweist, die parallel zueinander voneinander beabstandet angeordnet sind.

7. Messsystem nach einem der vorstehenden Ansprüche, **dadurch gekennzeichnet, dass** das Verteilerelement (6) derart ausgebildet ist, dass die elektromagnetische Strahlung von der Strahlungsquelle (2) das Verteilerelement (6) nur durch einen wählbaren Ausgang (20) verlässt oder derart ausgebildet ist, dass die elektromagnetische Strahlung von der Strahlungsquelle (2) das Verteilerelement (6) durch mehrere, vorzugsweise wählbare, Ausgänge (10) verlässt.

8. Messsystem nach einem der vorstehenden Ansprüche, **dadurch gekennzeichnet, dass** das Verteilerelement (6) ein Faserschalter für Glasfasern ist.

9. Messsystem nach einem der vorstehenden Ansprüche, **dadurch gekennzeichnet, dass** zwischen den Ausgängen (10) des Verteilerelementes (6) und den Messanordnungen (18) jeweils wenigstens ein Verdunkelungselement (32) angeordnet sind, die in eine geöffnete Stellung und eine geschlossene Stellung bringbar sind, in der sie verhindern, dass elektromagnetische Strahlung von einem Ausgang (10) des Verteilerelementes (6) zu der jeweiligen Messanordnung (18) geleitet wird, wobei sich vorzugsweise maximal eines der Verdunkelungselemente (32) in der geöffneten Stellung befindet.

10. Messsystem nach einem der vorstehenden Ansprüche, **dadurch gekennzeichnet, dass** das Messsystem mehrere Strahlungsquellen (2, 14) und mehrere Auswerteeinheiten (30) aufweist und/oder vorzugsweise wenigstens eine Strahlungsquelle (2, 14) und wenigstens eine Auswerteeinheit (30) eingerichtet sind, die absolute Länge einer Messstrecke (22) zu messen und/oder eingerichtet sind, eine Längenänderung einer Messstrecke, vorzugsweise in Echtzeit zu messen.

11. Messsystem nach einem der vorstehenden Ansprüche, **dadurch gekennzeichnet, dass** das Verteilerelement (6) mehrere Eingänge (8) aufweist und eingerichtet ist, elektromagnetischer Strahlung einer der Strahlungsquellen (2, 14) zu einer oder mehrerer Messanordnungen (18) zu leiten, wobei die Strahlungsquelle (2, 14) wählbar ist.

12. Messsystem nach einem der vorstehenden Ansprüche, **dadurch gekennzeichnet, dass** die Referenzflächen (20) mehrerer Messanordnungen (18) in einem gemeinsamen Gehäuse angeordnet sind, das vorzugsweise modular aufgebaut ist.

13. Technisches Mehrkörpersystem, insbesondere Bearbeitungs- oder Werkzeugmaschine, das
wenigstens einen Endeffektor, der innerhalb eines Bewegungsraumes bewegbar ist, und
ein Messsystem nach einem der vorstehenden Ansprüche aufweist,
wobei die Messanordnungen (18) des Messsystems derart angeordnet sind, dass die Messstrecken (22) einen Messraum aufspannen, der den Bewegungsraum umfasst,
wobei vorzugsweise die Referenzflächen (20) außerhalb des Bewegungsraumes angeordnet sind.

14. Verfahren zum Ermitteln kinematischer Parameter eines technischen Mehrkörpersystems, insbesondere einer Bearbeitungs- oder Werkzeugmaschine, wobei das Verfahren die folgenden Schritte aufweist:
• Bereitstellen wenigstens eines Reflektorelementes (24) an dem Mehrkörpersystem,
• Bereitstellen mehrerer Messanordnungen (18), so dass mehrere Messstrecken (22) definiert sind, wobei das wenigstens eine Reflektorelement (24) relativ zu den Messanordnungen bewegbar ist,
• Sequentielles Messen von Längen und/oder Längenänderungen der Messstrecken (22) wobei das Reflektorelement (24) entlang der Messstrecke (22) bewegt wird
• Auswerten der gemessenen Längen
• und/oder Längenänderungen und Ermitteln der kinematischen Parameter,
wobei vorzugsweise das wenigstens eine Reflektorelement (24) oder wenigstens eine Element der Messanordnungen (18), insbesondere ein Kollimator, an einem Endeffektor des Mehrkörpersystems angeordnet ist.

15. Verfahren zum Überwachen wenigstens einer Maschine, vorzugsweise wenigstens einer Werkzeugmaschine, bei dem eine Länge und/oder eine Längenänderung einer Mehrzahl von Messstrecken, die den Abständen eines Bauteils der wenigstens einen Maschine von jeweils einem Referenzpunkt entsprechen, mehrfach nacheinander gemessen und mit Referenzwerten verglichen wird, wobei zum Messen ein Messsystem nach einem der vorstehenden Ansprüche verwendet wird.
